Europäisches Patentamt

European Patent Office

Office européen des brevets

(19)

(11) Publication number: **0 439 883 A1**

# EUROPEAN PATENT APPLICATION

(12)

(21) Application number: **90301013.0**

(22) Date of filing: **31.01.90**

(51) Int. Cl.⁵: **C08L 51/04**, C08L 25/08,
//(C08L51/04,25:08,51:04)

(43) Date of publication of application:
**07.08.91 Bulletin 91/32**

(84) Designated Contracting States:
**BE DE FR GB IT NL SE**

(71) Applicant: **THE DOW CHEMICAL COMPANY**
**2030 Dow Center Abbott Road**
**Midland, MI 48640(US)**

(72) Inventor: **Beyer, Douglas Earl·**
**5701 Leeway Drive**
**Midland, Michigan 48640(US)**

(74) Representative: **Burford, Anthony Frederick et al**
**W.H. Beck, Greener & Co. 7 Stone Buildings Lincoln's Inn**
**London WC2A 3SZ(GB)**

(54) Heat resistant high impact polystyrene blends.

(57) A high heat impact resistant resin is prepared by blending a high impact polystyrene, a copolymer of a vinyl aromatic monomer and alpha-methylstyrene, and a styrene grafted rubber concentrate. Said copolymer is prepared by anionically polymerizing the vinyl aromatic monomer, especially styrene, and the alpha-methylstyrene at a temperature above the ceiling temperature of the alpha-methylstyrene. The blend may contain compatible polymers, especially high molecular weight general purpose polystyrene.

EP 0 439 883 A1

## HEAT RESISTANT HIGH IMPACT POLYSTYRENE BLENDS

The present invention relates to polymer blends comprising 1) a high impact polystyrene (HIPS); 2) an anionically polymerized copolymer of vinyl aromatic monomers, especially styrene and $\alpha$-methylstyrene prepared at a temperature above the ceiling temperature of $\alpha$-methylstyrene (SAMS); and 3) a styrene grafted rubber concentrate (SgRC). HIPS is a rugged polymer blend with high impact strength due to the presence of rubber reinforcement. One of the drawbacks to the use of HIPS is its low heat resistance. It will distort in boiling water. This eliminates its usefulness in applications such as hot fill food containers.

In U.S. 4,785,051 (Application Serial No. 726,577, filed April 24, 1985), blends of HIPS, polystyrene and a SgRC are disclosed. Disadvantageously, such blends are limited in heat distortion temperature and are unsuited for certain applications such as hot fill containers.

In U.S. 4,645,796 (Application Serial No. 840,485, filed March 14, 1986), blends of styrene and $\alpha$-methylstyrene (including anionically prepared copolymers prepared at a temperature above the ceiling temperature of $\alpha$-methylstyrene) and a SgRC are disclosed. While such blends achieve improved heat distortion, impact resistance is noticeably low due to the poor impact reinforcing properties of the grafted rubber component when blended at conventionally employed levels.

It has been proposed to prepare a high impact copolymer of styrene and $\alpha$-methylstyrene having improved heat distortion. In the proposed process $\alpha$-methylstyrene comonomer is added to a conventional mass or mass solution polymerization of styrene to prepare the high impact polymer. Disadvantageously, however, the differing relative rates of polymerization of styrene and $\alpha$-methylstyrene make it practically impossible to copolymerize such comonomers in the presence of rubber under typical mass polymerization conditions used to obtain high impact polystyrene.

According to the present invention, there is now provided a unique blend comprising (1) a high impact polystyrene (HIPS); (2) an anionically prepared copolymer of vinyl aromatic monomer and $\alpha$-methylstyrene prepared at a temperature above the ceiling of $\alpha$-methylstyrene (SAMS); and (3) a styrene grafted rubber concentrate (SgRC). The blends of the invention are uniquely designed to obtain high heat resistance normally unobtainable in impact polystyrene polymers, yet retain the high impact properties normally attributable to high impact (rubber modified) polystyrene.

The HIPS employed in the present invention is prepared according to conventional techniques known in the art. Suitably, HIPS is prepared by dissolving a rubbery polymer in styrene monomer, initiating polymerization by thermal or chemical means and continuing polymerization under conditions designed to obtain phase inversion of the resulting product and a particulated rubber structure. Preferably the rubber particles contain occlusions of the matrix polymer. Processes for the preparation of HIPS are well known in the art as demonstrated by reference to U.S. Patent 2,694,692 and numerous other references.

Suitable rubbery polymers for use in the preparation of HIPS include any polymer or copolymer having a glass transition temperature less than about $0\,^{\circ}$C that is compatible with the polymer matrix. Preferred rubbery polymers are butadiene polymers and copolymers thereof, especially block copolymers with vinyl aromatic monomers such as styrene.

The SAMS copolymers usefully employed in the present blend are uniquely prepared by copolymerization of a vinyl aromatic monomer, especially styrene, and $\alpha$-methylstyrene under anionic polymerization conditions at a temperature greater than the ceiling temperature (approximately $61\,^{\circ}$C) of $\alpha$-methylstyrene. Particular polymerization systems representative of those useful in preparation of SAMS copolymers are disclosed in the following U.S. Patents: 2,975,160; 3,030,346; 3,031,432; 3,139,416; 3,157,604; 3,159,587; 3,231,635; 3,498,960; 3,590,008; 3,751,403; 3,954,894; 4,183,877; 4,196,153; 4,196,154; 4,200,713; and 4,205,016.

Under anionic polymerization conditions at temperatures above the ceiling temperature of $\alpha$-methylstyrene random copolymers of vinyl aromatic monomer and $\alpha$-methylstyrene containing no more than two adjacent $\alpha$-methylstyrene moieties are formed. Because the ceiling temperature is defined as that temperature above which depolymerization of a polymer is thermodynamically favored over polymerization, homopolymers of $\alpha$-methylstyrene do not form at the conditions above specified. Accordingly, it is possible to obtain a maximum of two $\alpha$-methylstyrene units for every vinyl aromatic monomer unit in the SAMS copolymers. On a weight basis, such copolymers contain a maximum of 69.14 weight percent $\alpha$-methylstyrene and are considered to be more stable to depolymerization at elevated temperatures than are copolymers not prepared by the above technique.

The third essential component, SgRC, is likewise a well-known copolymer product. One suitable method for its production is the emulsion polymerization of styrene monomer in the presence of a rubbery latex as disclosed in U.S. 4,419,496. Suitable rubbery latexes include homopolymers of unsaturated dienes such as

EP 0 439 883 A1

butadiene as well as copolymers thereof with copolymerizable monomers such as monovinylidene aromatic comonomers, ethylenically unsaturated carboxylic acids and esters thereof. The styrene grafted rubber concentrate may be agglomerated or not.

The relative amounts of the various components are not particularly critical to the present invention. However, preferred practice dictates the presence of from about 10 to about 95 percent by weight of HIPS, from about 1 to about 30 percent by weight SgRC and from about 5 to about 80 percent by weight SAMS. More preferred ranges are from 15 to 80 percent by weight of HIPS, from 5 to 30 weight percent SgRC and from 15 to 60 weight percent SAMS.

Additional quantities of up to about 60 weight percent and preferably up to about 40 weight percent of free polystyrene or other compatible polymers may also be present in the blends of the present invention. Suitable polystyrene polymers include homopolymers of styrene prepared by anionic or free-radical techniques. Preferred polystyrene components are high molecular weight general purpose polystyrene (GPPS), having a molecular weight in excess of about 100,000, and especially in excess of about 250,000, as determined by the technique of gel permeation chromatography. Additional suitable compatible polymers are the polyphenylene oxides, elastomers such as block copolymers of styrene and butadiene, styrene grafted block copolymers, etc.

The blends according to the present invention may be prepared in any suitable compounding equipment. Examples include extruders, mills, mixers, etc. Suitably the dried resins are combined and thoroughly mixed and extruded to form the finished blend of the invention. At the same time, additional components may be added to the blend such as, for example, pigments, processing aids, fillers, stabilizers, plasticizers, lubricants, blowing agents, antioxidants, and the like. The thoroughly mixed and molten extrudate may then be cooled and chopped into pellets and molded or otherwise employed in the preparation of containers, foams, films, moldings and other useful objects.

Having described the invention, the following examples are provided as further enabling and are not to be construed as limiting. Where provided, parts and percentages are expressed as parts or percentages by weight.

Example 1

A blend corresponding to the invention is prepared by combining HIPS, SgRC, SAMS and GPPS. The HIPS resin (XP-70517 available from The Dow Chemical Company) contains 9.6 percent polybutadiene rubber having a rubber particle size of 2 micrometers.

The SgRC contains 47.5 percent polybutadiene rubber and has a volume average particle size of 1.3 micrometers. This SgRC is prepared by emulsion polymerization of butadiene to form a latex, chemically agglomerating the latex and grafting polystyrene thereto substantially according to the following technique.

An agglomerating agent for agglomeration of a polybutadiene latex is first prepared in a glass lined, jacketed, stirred Pfaudler kettle. The following mixtures are prepared in advance:

## Mixture 1

| Parts | Component |
|---|---|
| 807 | deionized water |
| 1.8 | sodium bicarbonate |
| 1.1 | sodium persulfate |
| 2.3 | Calsoft® L-40 surfactant (Pilot Chemical) |
| 1.3 | acrylic acid |

## Mixture 2

| | |
|---|---|
| 540 | ethyl acrylate |
| 60 | acrylic acid |

## Mixture 3

| | |
|---|---|
| 270 | deionized water |
| 28 | Calsoft® L-40 |

The reactor is charged with Mixture 1 at 30°C. The reactor is deoxygenated using nitrogen and vacuum. A portion (13.5 parts) of Mixture 2 is added and the reactor heated to 65°C and the reaction begun. After 15 minutes, the remainder of Mixture 2 is added at a slow continuous rate of about 117 parts/hour. Ten minutes after initiating continuous addition of Mixture 2, Mixture 3 is slowly added at a rate of about 60 parts/hour. Complete addition of the various mixtures requires about 5 hours after which the reactor is maintained at 65°C for an additional three hours. The agglomerating agent is cooled and filtered and retained as a latex for subsequent use in Mixture 6.

A second set of mixtures are next prepared having the following compositions.

4

## Mixture 4

| Parts | Componet |
|-------|----------|
| 65 | deionized water |
| 35 | polybutadiene seed latex (1,000Å (100 nm), 34.5% solids) |

## Mixture 5

| | |
|-------|----------|
| 97.4 | deionized water |
| 2.2 | Calsoft® L-40 |
| 0.4 | sodium persulfate |

## Mixture 6

| | |
|-------|----------|
| 98 | deionized water |
| 0.6 | Calsoft® L-40 |
| 1.4 | above prepared agglomerating agent latex |

## Mixture 7

| | |
|-------|----------|
| 0.15 | n-octyl mercaptan |
| 99.85 | styrene |

A stirred glass lined reactor is charged with Mixture 4 (16 parts) and deoxygenated using nitrogen and a vacuum. The reactor is heated to 70°C and 1.1 parts of Mixture 6 are added over a period of about 1/2 hour. Then, 5.04 parts of Mixture 5 and 5.88 parts of Mixture 7 are continuously charged to the reactor over a 7 hour period. The mixture is maintained at 70°C for an additional hour. Next, 0.02 parts of Topanol® CA antioxidant (ICI Americas, Inc.) are added and the latex concentrated by steam stripping. Dilaurylthiodipropionate (0.007 parts) is added and the latex is coagulated by freezing, concentrated by centrifuge and air dried. The resulting SgRC is employed without further modification to prepare the blends of the invention.

The SAMS copolymer is prepared substantially according to the following technique.

A feed stream comprising approximately equal volumes of ethylbenzene, styrene and α-methylstyrene is passed through a heat exchanger which raises the temperature of the feed stream to 55°C. The heated stream is discharged through a spray nozzle into a receiver having an internal pressure of about 20 millimeters of mercury (2.5 kPa). Spraying into the receiver serves to remove oxygen and most of the water present; about 1.5 weight percent of the stream is lost. From the receiver, the feed stream is passed through a molecular sieve commercially available under the trade designation of Linde® 3A. The stream is passed through a bed of the molecular sieve at a space velocity of 5 parts of the stream per part of sieve by weight per hour. The resultant feed material contains styrene, α-methylstyrene and ethylbenzene; less than 1 ppm of oxygen; less than 3 ppm of water; less than 5 ppm benzaldehyde; less than 5 ppm styrene oxide; less than 5 ppm of acetophenone; and about 40 ppm of phenylacetylene. The purified feed stream is pumped to a 2-liter Paar reactor, equipped with a hollow auger agitator, the hollow auger comprising a cylinder slightly shorter in length than the interior of the reactor and slightly smaller in diameter. A land is helically disposed on the outside of the cylinder. The land is sized such that the cylinder generated by rotation of the hollow cylinder and land is slightly less than the internal volume of the reactor. Such an

5

agitator is described in U.S. Patent 4,239,863, the teachings of which are herewith incorporated by reference thereto. Hot water under pressure is employed to heat the reactor to 95°C. The purified feed stream and initiator are introduced into the side of the reactor at a rate to give a two-hour residence time. The initiator is normal-butyllithium pumped at a rate to provide about 60 ppm. The pressure within the reactor is maintained at about 50 pounds per square inch gauge (450 kPa) using a pressure control valve at the outlet. The stream from the reactor is fed to a terminator coil of 1 inch (2.5 cm) inside diameter, 316 Stainless Steel tubing connected in a square configuration and having an internal volume of about 467 cubic centimeters. Material is recirculated within the terminator coil while a solution of 1 weight percent ethanol in ethylbenzene is fed to the terminator coil at a rate about twice that of the normal-butyllithium fed to the polymerizing vessel. Effluent from the terminator coil is then pressure fed into a devolatilizer equipped with a flat plate heater and a screw extruder substantially according to that described in U.S. Patent 3,014,702, the teaching of which is incorporated by reference thereto. The exterior of the heater is maintained at a pressure of less than 20 millimeters of mercury (2.5 kPa) and the product mixture is heated to a temperature of about 250°C to provide a polymer containing about 0.3 weight percent volatiles. The weight average molecular weight of the resultant SAMS polymer is about 134,000, with a ratio of weight average molecular weight to number average molecular weight (Mw/Mn) of about 2.2. The content of α-methylstyrene was about 48 percent by weight.

The polystyrene employed is general purpose polystyrene (GPPS), XP 6069 available from The Dow Chemical Company.

Blends corresponding to the invention and comparative examples are prepared by mixing the various components in a 0.8 (2 cm) inch Welding Engineers twin screw extruder. The resulting resin is injection molded and the physical properties of the injection molded samples tested and reported in Table I.

## TABLE I

| | A* | B | C | D* | E* |
|---|---|---|---|---|---|
| % HIPS | 100 | 57 | 22 | 0 | 0 |
| % SAMS | 0 | 33 | 33 | 33 | 79 |
| % GPPS | 0 | 0 | 28 | 46 | |
| % SgRC | 0 | 10 | 17 | 21 | 21 |
| | | | | | |
| % AMS | 0 | 16 | 16 | 16 | 16 |
| % Total Rubber | 9.6 | 10 | 10 | 10 | 10 |
| % Mass Rubber | 9.6 | 5 | 2 | 0 | 0 |
| % Emulsion Rubber | 0 | 5 | 8 | 10 | 10 |
| | | | | | |
| Tensile Yield (psi) | 3,300 | 4,200 | 5,100 | 6,100 | 6,000 |
| (MPa) | (23) | (29) | (35) | (42) | (41.5) |
| Tensile Rupture (psi) | 3,400 | 4,200 | 4,800 | 5,200 | 5,000 |
| (MPa) | (23.5) | (29) | (33) | (36) | (34.4) |
| Tensile Modulus (psi) | 270,000 | 330,000 | 370,00 | 380,000 | 380,000 |
| (MPa) | (1850) | (2300) | (2550) | (2600) | (2600) |
| % Elongation | 76 | 39 | 31 | 24 | 45 |
| | | | | | |
| Izod Impact | 2.5 | 2.0 | 1.8 | 0.6 | 0.4 |
| (ft-lb/in notch) (J/2.5 cm notch) | (3.4) | (2.7) | (2.4) | (0.8) | (0.5) |
| Vicat °F (°C) | 216 | 232 | 234 | 235 | 234 |
| | (102) | (111) | (112) | (113) | (112) |
| DTUL 66 psi (455 kPa) °F (°C) | 191 | 209 | 210 | 213 | |
| | (88) | (98) | (99) | (101) | |
| 264 psi (1820 kPa) °F (°C) | 164 | 181 | 184 | 188 | 186 |
| | (73) | (83) | (84) | (87) | (86) |

*comparative

It may be seen by comparison of the results obtained by testing of compositions B and C with those of A, that significantly improved heat distortion temperatures are obtained according to the compositions of the invention compared to high impact polystyrene. In addition, satisfactory Izod impact values are obtained (2.0 and 1.8 ft. lbs/in notch (2.7 and 2.4 J/2.5 cm notch) versus 2.5) ft. lbs/in notch (3.4 J/2.5 cm notch) despite the replacement of some mass rubber by emulsion rubber. By comparison of compositions B and C with those of D and E, however, it is seen that significantly improved impact strengths are achieved by the invented composition while retaining substantially all of the elevated heat distortion temperature improvement of the SAMS copolymer.

## Claims

1. A polymer blend comprising (1) a high impact polystyrene, (2) an anionically polymerized copolymer of a vinyl aromatic monomer and α-methylstyrene prepared at a temperature above the ceiling temperature of α-methylstyrene, and (3) a styrene grafted rubber concentrate.

2. A blend as claimed in Claim 1, containing 10 to 95 weight percent high impact polystyrene, 5 to 80 weight percent said copolymers and 1 to 30 weight percent styrene grafted rubber concentrate.

3. A blend as claimed in Claim 1 or Claim 2, further comprising one or more compatible polymers.

4. A blend as claimed in Claim 3, comprising general purpose polystyrene of molecular weight exceeding 100,000.

5. A blend as claimed in any one of the preceding claims, wherein the vinyl aromatic monomer is styrene.

6. A blend as claimed in any one of the preceding claims, wherein the styrene grafted rubber is a styrene grafted butadiene polymer or copolymer.

7. A blend as claimed in Claim 6, wherein the styrene grafted rubber is a styrene grafted butadiene homopolymer.

8. A blend as claimed in any one of the preceding claims, wherein the high impact polystyrene is derived from styrene and a butadiene polymer or copolymer.

9. A blend as claimed in Claim 8, wherein the high impact polystyrene is derived from styrene and a block copolymer of butadiene with styrene.

10. An article derived from a blend as claimed in any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | WO-A-8 502 192 (DOW CHEMICAL) * Page 25, tables 1-2; claims * | 1-10 | C 08 L 51/04 |
| D,Y | WO-A-8 600 082 (DOW CHEMICAL) * Claims * | 1-10 | C 08 L 25/08 // (C 08 L 51/04 C 08 L 25:08 C 08 L 51:04 ) |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 11-07-1990 | LOISELET-TAISNE S.M.T. |

EPO FORM 1503 03.82 (P0401)